# EUROPEAN PATENT APPLICATION

(11) **EP 2 579 294 A1**
(43) Date of publication of application: **10.04.2013**
(21) Application number: 11789594.6
(22) Date of filing: 13.05.2011
(51) Int. Cl.: H01J 61/06, H01J 61/067

(54) **ELECTRODE FOR HOT-CATHODE FLUORESCENT LAMP AND HOT-CATHODE FLUORESCENT LAMP**

(30) Priority: 31.05.2010 JP 2010124977
(71) Applicant: Asahi Glass Company, Limited, Tokyo 100-8405 (JP)
(72) Inventor: MIYAKAWA Naomichi, Tokyo 100-8405 (JP); ITO Kazuhiro, Tokyo 100-8405 (JP); WATANABE Satoru, Tokyo 100-8405 (JP); WATANABE Toshinari, Tokyo 100-8405 (JP); MIKOSHIBA Shigeo, Tokyo 168-0063 (JP)
(74) Representative: Müller-Boré & Partner Patentanwälte
(86) International application number: PCT/JP2011/061033
(87) International publication number: WO 2011/152185

(57) **Abstract**

The present invention relates to an electrode for a hot cathode fluorescent lamp, including a main body that emits thermions, a conductive support that supports the main body, and a lead electrically connected to the conductive support, wherein the main body includes no filament structure and is made of a bulk material having a columnar shape or an ingot shape formed by a conductive mayenite compound.

## Description

### TECHNICAL FIELD

The present invention relates to an electrode for a hot cathode fluorescent lamp, and the hot cathode fluorescent lamp.

### BACKGROUND ART

A fluorescent lamp may be put to various use, including an illumination for home use, a back light of a display unit, light irradiation at various stages of production, and the like.

The fluorescent lamp may be categorized into two kinds, namely, a cold cathode fluorescent lamp and a hot cathode fluorescent lamp. The cold cathode fluorescent lamp is the general term referring to a fluorescent lamp that requires no heating of an electrode and has a relatively low electrode temperature during operation. In the case of the cold cathode fluorescent lamp, the electrode temperature may be on the order of approximately 400°C to 500°C at the maximum. On the other hand, the hot cathode fluorescent lamp is the general term referring to a fluorescent lamp in which the electrode is heated during operation, and the electrode temperature during operation may become relatively high. In the case of the hot cathode fluorescent lamp, the electrode temperature may often exceed 1000°C.

Generally, compared to the cold cathode fluorescent lamp, the hot cathode fluorescent lamp has a higher efficiency and a higher luminance, but there is a problem in that the electrode wear is larger and the life is shorter.

The hot cathode fluorescent lamp generally has a "filament structure". The filament structure refers to a structure formed by a metal material, such as tungsten, molybdenum, and the like, having both ends supported by a support line. According to this filament structure, a coating or the metal material itself may be energized and heated. Usually, the electrode is formed by coating an electron emitting material called an emitter on the filament. The emitter has a function of decreasing the work function of the electrode and promoting thermionic emission at the time of the discharge. Usually, an alkaline earth metal oxide, such as barium oxide (BaO), strontium oxide (SrO), calcium oxide (CaO), and the like may be used as the emitter material (for example, Patent Document 1). Accordingly, the startability and the lamp efficiency of the hot cathode fluorescent lamp may be improved by employing the "filament structure" for the electrode.

In addition, the Patent Document 2 describes a fluorescent lamp that may realize satisfactory discharge characteristics and low power consumption, by using conductive mayenite in a part within the discharge lamp. However, the fluorescent lamp of the Patent Document 2 is for use as a cold cathode fluorescent lamp, an external electrode fluorescent lamp, or flat fluorescent lamp, and the conductive mayenite compound powder is coated on or worked into a cup-shaped electrode. The Patent Document 2 contains no description related to a hot cathode fluorescent lamp.

### PRIOR ART DOCUMENTS

### PATENT DOCUMENTS

Patent Document 1: Japanese Laid-Open Patent Publication No. 2007-305422
Patent Document 2: International Publication No. WO 2009/145200

### DISCLOSURE OF THE INVENTION

### PROBLEM TO BE SOLVED BY THE INVENTION

As described above, compared to the cold cathode fluorescent lamp, the hot cathode fluorescent lamp suffers from the problem of large electrode wear and short life.

The above problem occurs in the case of the hot cathode fluorescent lamp because the electrode needs to be heated at the start in order to start the discharge, and the electrode needs to be maintained at the high temperature in order to maintain the discharge. However, due to the repeated lighting and use under a high temperature environment (for example, ~1000°C), the filament may deteriorate in a relatively short time, and the filament may break when the deterioration progresses to a large extent.

In addition, there is a tendency for the emitter of the electrode to wear with operating time, and the remaining amount of the emitter may be one factor that determines the life of the hot cathode fluorescent lamp. For this reason, at the forwarding (unused) stage of the hot cathode fluorescent lamp, it may be conceivable to provide a large amount of emitter on the filament. However, because the emitter is usually formed from a nonconductive oxide, when a large amount of emitter is provided on the filament, the electrode temperature uneasily rises, and a problem may be encountered in the startability and the lamp efficiency of the hot cathode fluorescent lamp.

Accordingly, extending the life of the electrode is a notable problem to be solved in the hot cathode fluorescent lamp.

The present invention is conceived in view of the above problem, and one object of the present invention is to provide an electrode for a hot cathode fluorescent lamp that may be properly used for a long time, and the hot cathode fluorescent lamp having such an electrode.

### MEANS OF SOLVING THE PROBLEM

The present invention may provide an electrode for a hot cathode fluorescent lamp, including:
a main body that emits thermions;
a conductive support that supports the main body; and
a lead electrically connected to the conductive support,
wherein the main body includes no filament structure and is made of a bulk material having a columnar shape or an ingot shape formed by a conductive mayenite compound.

In the electrode according to the present invention, a number of the lead may be one.

In addition, in the electrode according to the present invention, the lead and the conductive support may be formed integrally.

Moreover, in the electrode according to the present invention, the main body may have a rod shape.

Further, in the electrode according to the present invention, the main body may have a mass in a range of 0.001 g to 20 g.

In addition, in the electrode according to the present invention, the main body may have a shape that is elongated along a major axis, and a cross section along a direction perpendicular to the major axis may have a cross sectional area (S1) in a range of 0.07 mm² to 500 mm².

Moreover, in the electrode according to the present invention,
the conductive support may include two end parts,
a first end part may be connected to the main body,
a second end part may have a shape extending in a direction opposite to the main body, and
the second end part may be connected to the lead or forms the lead.

Further, in the electrode according to the present invention,
the lead may penetrate and be sealed in a sealing part that hermetically seals a discharge space of the hot cathode fluorescent lamp in a state in which the electrode is connected to the hot cathode fluorescent lamp,
a part of the lead adjacent to the sealing part may have a cross sectional area (S2) within the discharge space, and
a ratio of the cross sectional area (S1) of the main body in the direction perpendicular to the major axis and the cross sectional area (S2) of the lead may be in a range of 1:1 to 2500:1 (S1:S2).

Particularly, the cross sectional area (S2) of the lead may be in a range of 0.007 mm² to 400 mm².

In addition, the present invention may provide a hot cathode fluorescent lamp including a bulb provided with phosphor, and a pair of electrodes within the bulb,
wherein at least one of the pair of electrodes is the electrode having the features described above.

Moreover, the present invention may provide an illumination apparatus including the hot cathode fluorescent lamp having the features described above, and including no heating circuit.

Further, the present invention may provide an illumination apparatus for lighting control, including the hot cathode fluorescent lamp having the features described above, and including a lighting circuit for lighting control that includes no heating circuit.

### EFFECTS OF THE INVENTION

The present invention may provide an electrode for a hot cathode fluorescent lamp that may be properly used for a long time, and the hot cathode fluorescent lamp having such an electrode.

### BRIEF DESCRIPTION OF THE DRAWING

FIG. 1 is an enlarged view, schematically illustrating a part in cross section, of an example of a conventional hot cathode fluorescent lamp;
FIG. 2 is an enlarged view illustrating a part of an electrode of the hot cathode fluorescent lamp illustrated in FIG. 1;
FIG. 3 is a cross sectional view schematically illustrating an example of a hot cathode fluorescent lamp according to the present invention;
FIG. 4 is a cross sectional view schematically illustrating another structure of a conductive support of the electrode;
FIG. 5 is a cross sectional view schematically illustrating still another structure of the conductive support of the electrode;
FIG. 6 is a diagram illustrating a relationship of a lamp current and a voltage in a lamp according to a Practical Example 1;
FIG. 7 is a cross sectional view schematically illustrating an electrode for the hot cathode fluorescent lamp according to the present invention;
FIG. 8 is a diagram illustrating the relationship of the lamp current and the voltage in the lamp according to a Practical Example 3; and
FIG. 9 is a diagram illustrating the relationship of the lamp current and the voltage in the lamp according to a Practical Example 4.

### MODE OF CARRYING OUT THE INVENTION

A detailed description will hereinafter be given of the present invention with reference to the drawings.

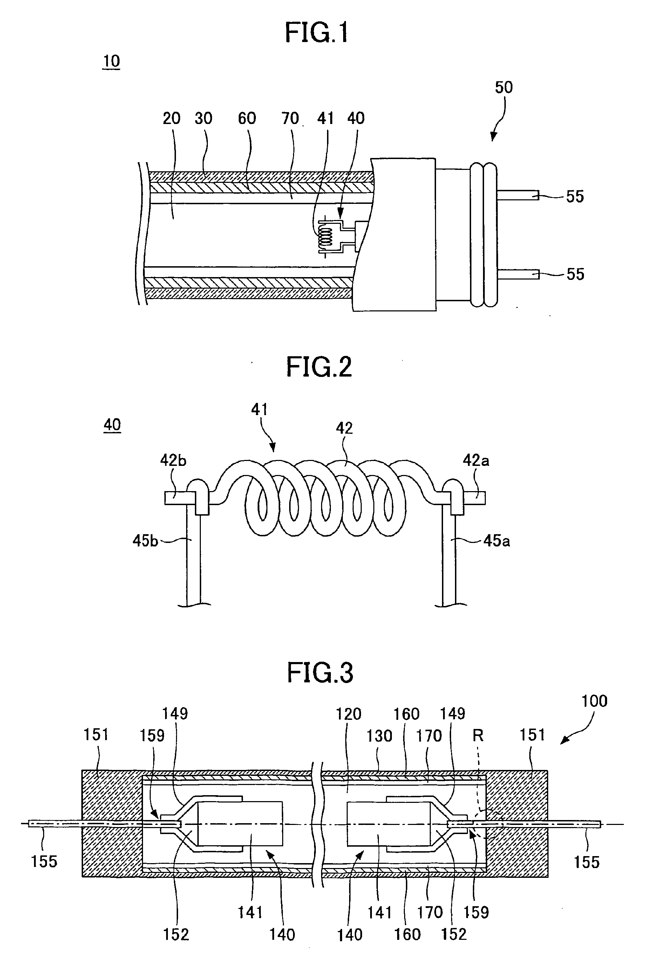

First, a brief description will be given of a structure of a conventional hot cathode fluorescent lamp, by referring to FIGs. 1 and 2, in order to facilitate understanding of features of the present invention. FIG. 1 is an enlarged view, schematically illustrating a part in cross section, of an example of the conventional hot cathode fluorescent lamp. In addition, FIG. 2 is an enlarged view illustrating a part of an electrode 40 illustrated in FIG. 1.

As illustrated in FIG. 1, a conventional hot cathode fluorescent lamp 10 includes a glass tube 30 having a tubular shape and a discharge space 20, the electrode 40, and a plug part 50.

A protection layer 60 and phosphor 70 are provided on an inner surface of the glass tube 30. However, the provision of the protection layer 60 is arbitrary. A discharge gas is filled into the discharge space 20, and the discharge gas may be argon gas including mercury, for example.

The plug part 50 is provided on both ends of the hot cathode fluorescent lamp 10 in order to support the glass tube 30, and includes two pins 55.

The electrode 40 is sealed at both ends of the glass tube 30 (however, only one electrode 40 illustrated in FIG. 1).

As illustrated in FIG. 2 in more detail, the electrode 40 includes a main body 41, and support lines 45a and 45b.

The main body 41 includes a coil-shaped filament 42 having a pair of end parts 42a and 42b.

The filament 42 may be formed from tungsten, molybdenum, and the like. In addition, an emitter (not illustrated) formed by an oxide, such as barium oxide (BaO), strontium oxide (SrO), calcium oxide (CaO), and the like, is provided on the filament 42.

In this specification, such a structure of the electrode main body 41 having the emitter provided on the filament may be specifically referred to as "filament structure".

The support lines 45a and 45b are conductive, and ends of the support lines 45a and 45b are electrically connected to end parts 42a and 42b of the filament 42, respectively. In addition, other ends of the support lines 45a and 45b are electrically connected to the pins 55 of the plug part 50, respectively. The support lines 45a and 45b have a function of supporting the filament 42.

The hot cathode fluorescent lamp 10 having the structure described above may operate as follows.

First, the filament structure of the electrode 40 (that is, the filament 42 and the emitter) is heated by an energizing via the pins 55 and the support lines 45a and 45b. At the same time, a voltage is applied between the two electrodes 40 (only one illustrated in FIG. 1).

Next, electrons (thermions) are emitted from the emitter that is heated to a high temperature. The thermions move from one electrode to the other due to an electric field generated between the two electrodes 40, to thereby generate a lamp current.

A part of the thermions collides with mercury atoms sealed within the discharge space 20 of the glass tube 30. Hence, the mercury atoms are excited, and ultraviolet rays are generated when the excited mercury returns to a normal state.

The emitted ultraviolet rays are irradiated on the phosphor 70 of the glass tube 30, and thus, visible light is generated from the phosphor 70.

By the series of treatments described above, the visible light may be emitted from the hot cathode fluorescent lamp 10.

However, in the hot cathode fluorescent lamp 10 having the structure described above, there is a problem in that the life is relatively short. It may be regarded that the relatively short life is caused by the following.

That is, when starting the lamp, the filament 42 and the emitter of the electrode 40 are rapidly heated, and when the discharge starts, the emitter provided on the filament may scatter or separate from the filament due to the rapid heating. In addition, these parts of the electrode are subjected to a high temperature of 1000°C or higher when the discharge starts. For this reason, the filament 42 may deteriorate in a relatively short time when the heating is repeated, and the filament 42 may break when the deterioration progresses to a large extent. Accordingly, the scattering or separation of the emitter and the breaking of the filament 42 may be one large factor reducing the life of the lamp as a whole.

Further, the emitter on the filament 42 has a tendency to wear with operating time, and it may no longer be possible to maintain the discharge within the glass tube 30 when the amount of emitter becomes excessively small. Accordingly, the wear of the emitter may be one large factor reducing the life of the lamp as a whole.

In order to improve the life of the emitter due to wear, it may be conceivable to provide a large amount of emitter on the filament 42 at the forwarding (unused) stage of the fluorescent lamp. However, because the emitter is usually formed from a nonconductive oxide, when a large amount of emitter is provided on the filament 42, the temperature of the filament 42 and the emitter uneasily rises, and a problem may be encountered in the startability and the efficiency of the lamp. Hence, such a conceivable method of improving the life of the emitter due to wear does not provide practical measures for improving the life of the hot cathode fluorescent lamp 10.

Therefore, in the conventional hot cathode fluorescent lamp 10, the deterioration and wear of the electrode 40, particularly the filament 42 and the emitter, may be one large factor preventing the life of the lamp from being extended.

On the other hand, in a hot cathode fluorescent lamp according to the present invention, the conventional "filament structure" is not employed for the electrode, and the life of the electrode may be significantly improved, as will be described in detail hereinafter.

Next a detailed description will be given of the hot cathode fluorescent lamp according to the present invention, by referring to FIG. 3. FIG. 3 is a cross sectional view schematically illustrating an example of the hot cathode fluorescent lamp according to the present invention.

As illustrated in FIG. 3, a hot cathode fluorescent lamp 100 according to the present invention includes a bulb 130 made of glass or the like having a tubular shape and a discharge space 120, electrodes 140, and a sealing part 151.

A protection layer 160 and phosphor 170 are provided on an inner surface of the bulb 130. A discharge gas is filled into the discharge space 120, and the discharge gas may include a rare gas. The discharge gas may be argon gas including mercury, for example. The protection layer 160 may prevent elution of sodium included in the bulb 130, and may mainly suppress generation of a compound of mercury and sodium, in order to prevent an inner wall of the fluorescent lamp from blackening. However, the provision of the protection layer 160 may be arbitrary.

The sealing part 151 is provided on both ends of the hot cathode fluorescent lamp 100 to hermetically seal the discharge space of the bulb 130. In the example illustrated in FIG. 3, the sealing part 151 is formed by a single part that is integrally formed on the bulb 130. However, the sealing part 151 may be formed by a part different from the bulb 130.

The electrode 140 includes a main body 141, and a conductive support 149 to support the main body 141. In the example illustrated in FIG. 3, the conductive support 149 includes an accommodating opening 152, and the main body 141 may be fitted into the accommodating opening 152 in order to support the main body 141 by the conductive support 149. However, this structure of the conductive support 149 is only an example, and the conductive support 149 may support the main body 141 by other methods.

The main body 141 is provided as a so-called "bulk material". It is to be noted that the term "bulk material" refers to a part, that is formed by a single member and may exist by itself. Accordingly, the "bulk material" is different from a thin film, a coating layer, and a coated material. Furthermore, the "bulk material" is different in concept from a composite part formed by a plurality of parts, having the thin film, the coating layer, the coated material, or the like provided on a base part.

However, because the main body is subjected to the high temperature during operation, in a case in which the bulk material has an elongated shape, a support is preferably inserted into the center of the bulk material in order to suppress deformation due to heat.

In addition, the main body 141 may have a columnar shape or an ingot shape. The columnar shape may refer to a solid with upper and lower surfaces having the same cross sectional area, and a solid with upper and lower surfaces having different cross sectional areas. The solid with upper and lower surfaces having the same cross sectional area includes a rectangular column, a hexagonal column, a circular column, and the like. The solid with upper and lower surfaces having different cross sectional areas includes a truncated rectangular pyramid, a truncated circular cone, and the like. On the other hand, the ingot shape may refer to a single, general solid shape such as a circular cone, a rectangular pyramid, a hollow circular cylinder, a hollow rectangular cylinder, a sphere, spiral shape, and the like, and may also refer to a shape that is a combination of such general solid shapes. Examples of the shape that is a combination of general solid shapes may include a pencil shape that is a combination of a circular column having a bottom surface at one end thereof joined to a bottom surface of a circular cone, or a combination of a rectangular column having a bottom surface at one end thereof joined to a bottom surface of another rectangular column. The circular column (rod shape) or the pencil shape is preferable for the electrode. The mass of the main body 141 is preferably in a range of 0.001 g to 20 g, and may be 1 mg or greater, for example, and be in a range of 2 mg to 0.5 g, for example. Hence, compared to the conventional emitter, the reduced life of the main body 141 due to wear may be improved. When a compact has the rod shape, the diameter is preferably 0.3 mm to 5 mm, and the length is preferably 1 mm to 15 mm. When the compact has the pencil shape, the diameter of the circular column part is preferably 0.3 mm to 5 mm, the length of the circular column part is preferably 1 mm to 10 mm, and the length of the circular cone part is preferably 1 mm to 10 mm.

Further, the main body 141 may have a shape that is elongated along a major axis. In this case, a cross sectional area (S1) along a direction perpendicular to the major axis of the main body 141 is preferably in a range of 0.07 mm² to 500 mm², and may be on the order of 0.1 mm² to 7 mm². The cross sectional area along the direction perpendicular to the major axis may differ along the longitudinal direction.

One end of a conductive lead 155 is connected to a part of the conductive support 149. The lead 155 may be used as a terminal to apply a voltage to the electrode 140. In the example illustrated in FIG. 3, one end of the lead 155 is inserted into an opening 159 that is provided at a central part of the conductive support 149. However, this method of connection is only an example, and the method of connecting the conductive support 149 and the lead 155 is not limited to such a method of connection. In addition, the conductive support 149 and the lead 155 may be formed integrally as a single part. The other end of the lead 155 penetrates the sealing part 151 and may be drawn outside the hot cathode fluorescent lamp 100.

In the present invention, the main body 141 of the electrode 140 is formed by a conductive mayenite compound. The conductive mayenite compound may have a work function of 2.4 eV which is relatively low, and is conductive. For this reason, the discharge by the secondary electron emission may be started even when the applied voltage on the conductive mayenite compound is small at the time of starting. In addition, the conductive mayenite compound heats itself due to the discharge thereof, and may quickly make a transition to the thermion emission stage. Consequently, the conductive mayenite compound may exhibit functions similar to those of the emitter of the electrode 40 in the conventional hot cathode fluorescent lamp 10, that is, efficiently emit the electrons.

In order to generate the phenomenon described above, the conductivity of the conductive mayenite is preferably on the order of approximately 0.1 S/cm. In this case, the main body 141 including the conductive mayenite compound requires no heating part corresponding to the conventional filament 42. Moreover, the main body 141 may be provided in the form of the so-called "bulk material", and may be provided with a large mass or a large volume when compared to the case in which the thin film or the coating is provided.

Accordingly, the following characterizing effects may be obtained according to the present invention.
(i) The electrode 140 does not employ the "filament structure", and a "disconnection" such as that encountered in the conventional filament does not occur.
(ii) Because the main body 141 formed by the bulk material is used, the reduced life caused by wear of the conventional emitter may be suppressed. In other words, by setting the bulk amount (mass, volume) of the main body 141 to a large value in advance, the life of the main body 141 may be extended. No problems are introduced from the point of view of the performance of the lamp, even when the bulk amount (mass, volume) of the main body 41 is set to the large value in advance. In addition, the initial bulk amount (mass, volume) of the main body 141 may easily be adjusted by adjusting the mass and/or the shape of the main body 141.

Accordingly, in the present invention, the life of the electrode 140 and thus the hot cathode fluorescent lamp 100 may be significantly improved.

Furthermore, in the present invention, the following additional effects may also be utilized when necessary.
(iii) In the present invention, preheating the electrode 140 when starting the hot cathode fluorescent lamp 100 is unnecessary, unlike the conventional lamp. This is because the main body 141 including the conductive mayenite compound has a self-heating characteristic. That is, because the conductive mayenite compound has a suitable conductivity, the main body 141 may be heated by the lamp current at the time of starting the lamp, by generating heat due to the resistance of the main body 141 itself.

Therefore, in the hot cathode fluorescent lamp 100 according to the present invention, a circuit and the like for the preheating may be omitted, and the structure of the entire lamp may be simplified. In other words, an illumination apparatus having the hot cathode fluorescent lamp 100 according to the present invention, and not including a heating circuit, may be provided.

In a high-frequency lighting type lamp lighting circuit using the conventional hot cathode fluorescent lamp, a lighting circuit for lighting control has been developed in which the discharge current is controlled and the amount of light of the illumination is controlled, by controlling a lighting frequency depending on a length of an input time of a pulse signal. The lighting control may be useful from the point of view of saving energy or color rendering property.

In the conventional lighting circuit for lighting control, a heating current is controlled by the heating circuit in order to reduce the heating current when the discharge current is large and to increase the heating current when the discharge current is small, from the point of view of extending the life of the lamp.

However, when the hot cathode fluorescent lamp 100 according to the present invention is used, the lighting control may be made by merely controlling the discharge current, without providing the heating circuit. The present invention may provide an illumination apparatus for lighting control, including the hot cathode fluorescent lamp having the conductive mayenite compound described above, and a lighting circuit for lighting control but not having a heating circuit.
(iv) As described above under (iii), the main body 141 has the self-heating characteristic. For this reason, the lead 155 drawn out from each electrode 140 is only required for applying the voltage, and the number of the lead 155 drawn out from each electrode 140 may be reduced to one. As a result, the electrode structure may be simplified.

Therefore, the present invention may obtain significant effects not obtainable by the conventional hot cathode fluorescent lamp 10.

### (Details of Each Part of Fluorescent Lamp of Present Invention)

Next, a detailed description will be given of the electrode 140 and the phosphor 170 of the hot cathode fluorescent lamp 100 according to the present invention. The specifications related to parts including the bulb 130, the sealing part 151, the protection layer 160, and the like are sufficiently obvious to those skilled in the art, and a description thereof will be omitted.

### (Electrode 140)

As described above, the electrode 140 in the present invention includes the main body 141, the conductive supports 149, and the leads 155.

### (Main Body 141)

As described above, the main body 141 of the electrode 140 in the present invention is formed by the conductive mayenite compound.

The "mayenite compound" is the general term referring to 12CaO-7Al₂O₃ (hereinafter also referred to as "C12A7") having a cage structure, and a compound (isomorphic compound) having a crystal structure equivalent to C12A7.

Generally, the mayenite compound clathrates oxygen ions within the cage thereof, and such oxygen ions may be referred to as "free oxygen ions".

In addition, a part or all of the "free oxygen ions" may be substituted by electrons by a reducing treatment or the like, and the compound in which the electron density is 1.0 x 10¹⁵ cm⁻³ or higher is called the "conductive mayenite compound". The "conductive mayenite compound" is conductive as the term indicates, and may be used for the electrode material of the present invention.

In the present invention, the electron density of the "conductive mayenite compound" is preferably 1.0 x 10¹⁸ cm⁻³ or higher, more preferably 1.0 x 10¹⁹ cm⁻³ or higher, and further more preferably 1.0 x 10²⁰ cm⁻³ or higher. When the electron density of the conductive mayenite compound is lower than 1.0 x 10¹⁸ cm⁻³, the resistance of the electrode becomes high when the conductive mayenite compound is used for the electrode.

A relationship between the electron density and the conductivity of the conductive mayenite compound may be as follows. Because the electric conductivity of the conductive mayenite compound in the present invention is 0.1 S/cm when the electron density is 1 x 10¹⁸ cm⁻³, the electric conductivity is preferably 0.1 S/cm or higher, and more preferably 1.0 S/cm or higher. The maximum value of the electric conductivity may be on the order of approximately 1500 S/cm in the case of a single crystal.

In this specification, the electron density of the conductive mayenite compound refers to a measured value of the spin density that is measured using an electron spin resonance apparatus or, calculated based on a measurement of an absorption coefficient. Generally, the electron density may preferably be measured using the electron spin resonance apparatus (ESR apparatus) when the measured value of the spin density is lower than 10¹⁹ cm⁻³, and the electron density may be calculated in the following manner when the spin density exceeds 10¹⁸ cm⁻³. First, a spectrophotometer is used to measure the intensity of light absorption by electrons inside the cage of the conductive mayenite, and the absorption coefficient at 2.8 eV is obtained. Next, the electron density of the conductive mayenite is quantified using that the obtained absorption coefficient is proportional to the electron density. In addition, when the conductive mayenite compound is powder or the like and the measurement of a transmission spectrum by a photometer is difficult, a diffuse reflectance spectrum may be measured using an integrating sphere, and the electron density of the conductive mayenite may be calculated from the value acquired according to the Kubelka-Munk method.

In the present invention, as long as the conductive mayenite compound has the C12A7 crystal structure including calcium (Ca), aluminum (Al), and oxygen (O), a part or all of at least one kind of atom selected from calcium (Ca), aluminum (Al), and Oxygen (O) may be substituted by other atoms or atom groups. For example, a part of calcium (Ca) may be substituted by atoms of magnesium (Mg), strontium (Sr), barium (Ba), lithium (Li), sodium (Na), chromium (Cr), manganese (Mn), cerium (Ce), cobalt (Co), nickel (Ni), and/or copper (Cu), and the like. In addition, a part of aluminum (Al) may be substituted by atoms of silicon (Si), germanium (Ge), boron (B), gallium (Ga), titanium (Ti), manganese (Mn), iron (Fe), cerium (Ce), praseodymium (Pr), scandium (Sc), lanthanum (La), yttrium (Y), europium (Eu), ytterbium (Yb), cobalt (Co), nickel (Ni), and/or terbium (Tb), and the like. Further, the oxygen in the cage or framework may be substituted by nitrogen (N) and the like.

In addition, the conductive mayenite compound is preferably a 12CaO-7Al₂O₃ compound, a 12SrO-7Al₂O₃ compound, a mixed crystal compound of these compounds, or an isomorphic compound of these compounds.

The following compounds (1) - (4) are examples of the conductive mayenite compound, but the conductive mayenite compound is of course not limited to such examples.
(1) Calcium magnesium aluminate (Ca_{1-y}Mg_{y})₁₂Al₁₄O₃₃ or calcium strontium aluminate (Ca_{1-z}Sr_{z})₁₂Al₁₄O₃₃, which are mixed crystals in which a part of calcium (Ca) in the framework of the C12A7 compound is substituted by magnesium (Mg) or strontium (Sr), where y and z are preferably 0.1 or less.
(2) Ca₁₂Al₁₀Si₄O₃₅ which is a silicon substitution type mayenite.
(3) For example, Ca₁₂Al₁₄O₃₂:2OH⁻ or Ca₁₂Al₁₄O₃₂:2F⁻, in which the free oxygen ions within the cage are substituted by anions such as H⁻, H₂-, H²-, O⁻, O₂⁻, OH⁻, F⁻, Cl⁻, Br⁻, S²⁻, or Au⁻.
(4) For example, wadalite Ca₁₂Al₁₀Si₄O₃₂:6Cl⁻ in which both the cations and anions are substituted.

In the present invention, the main body 141 of the electrode 140 may be formed solely from the conductive mayenite compound, or may include a separate additive material. For example, the separate additive material may be barium oxide (BaO), strontium oxide (SrO), calcium oxide (CaO), or the like. When the electrode main body 141 simultaneously includes the conductive mayenite compound and such an oxide, an excellent thermion emission characteristic may be obtained in a wide temperature range, from a low temperature region (extent of ~800°C) to a high temperature region (extent of ~1300°C).

For example, the separate additive material may be added in a range of 1 wt% to 50 wt% with respect to a total weight of the main body 141.

The resistance of the main body 141 may be in a range of 0.1 Ω to 100 Ω. The resistance of the main body 141 is preferably in a range of 0.5 Ω to 50 Ω, more preferably in a range of 1 Ω to 20 Ω, and further more preferably in a range of 2 Ω to 10 Ω. When the resistance is less than 0.1 Ω, the current flowing through the entire circuit becomes large, and it may be impossible to selectively heat only the electrode. On the other hand, when the resistance exceeds 100 Ω, the current uneasily flows, and it may be impossible to sufficiently heat the electrode.

In the present invention, the conductivity of the conductive mayenite compound may be adjusted relatively easily by a heat treatment under a reducing atmosphere. Accordingly, the resistance of the main body 141 may also be controlled relatively easily. In addition, the resistance may also be controlled by the extent of densification of the sintered body.

In addition, the main body 141 may have a columnar shape or an ingot shape. The columnar shape may refer to a solid with upper and lower surfaces having the same cross sectional area, and a solid with upper and lower surfaces having different cross sectional areas. The solid with upper and lower surfaces having the same cross sectional area includes a rectangular column, a hexagonal column, a circular column, and the like. The solid with upper and lower surfaces having different cross sectional areas includes a truncated rectangular pyramid, a truncated circular cone, and the like. On the other hand, the ingot shape may refer to a single, general solid shape such as a circular cone, a rectangular pyramid, a hollow circular cylinder, a hollow rectangular cylinder, a sphere, spiral shape, and the like, and may also refer to a shape that is a combination of such general solid shapes. Examples of the shape that is a combination of general solid shapes may include a pencil shape that is a combination of a circular column having a bottom surface at one end thereof joined to a bottom surface of a circular cone, or a combination of a rectangular column having a bottom surface at one end thereof joined to a bottom surface of another rectangular column. The circular column (rod shape) or the pencil shape is preferable for the electrode. The mass of the main body 141 is preferably in a range of 0.001 g to 20 g, and may be 1 mg or greater, for example, and be in a range of 2 mg to 0.5 g, for example. Hence, compared to the conventional emitter, the reduced life of the main body 141 due to wear may be improved.

Further, the main body 141 may have a shape that is elongated along the major axis. In this case, the cross sectional area (S1) along the direction perpendicular to the major axis of the main body 141 is preferably on the order of 0.01 mm² to 7 mm². The cross sectional area along the direction perpendicular to the major axis may differ along the longitudinal direction.

### (Conductive Support 149)

Refractory metals may be used for the material forming the conductive support 149. For example, molybdenum and tungsten are suitable refractory metal materials. An alloy of tungsten and thorium may also be used for the material. In addition, iron, nickel, copper, chromium, cobalt and alloys of such metals may be used for the material. The conductive support 149 may take any shape.

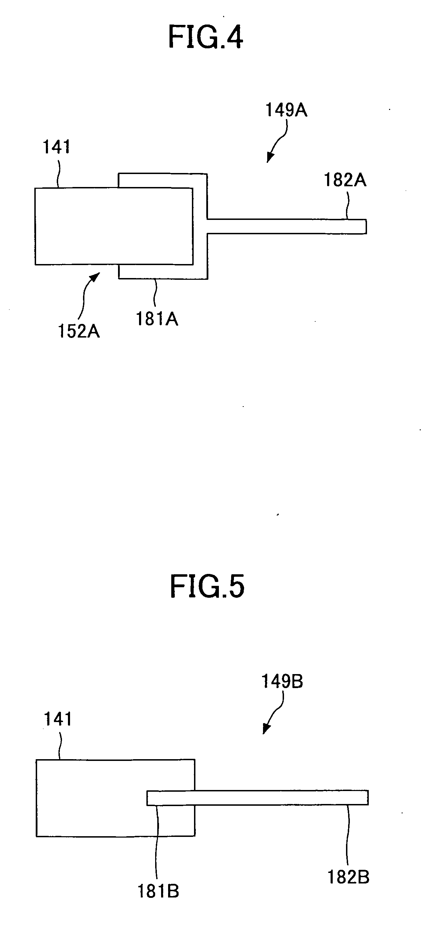

FIGs. 4 and 5 illustrate other structures of the conductive support of the electrode, different from the conductive support 149 illustrated in FIG. 3.

In the example illustrated in FIG. 4, a conductive support 149A includes a first end part 181A, and a second end part 182A. The first end part 181A includes, at a central part thereof, an accommodating opening 152A having a hollow circular cylinder shape or a hollow rectangular cylinder shape for accommodating the main body 141. In addition, the second end part 182A has a rod shape and extends to the side opposite to the main body 141. The second end part 182A may further be connected to the lead 155 described above. Alternatively, the second end part 182A may be formed integrally with the lead 155 described above.

FIG. 5 illustrates still another structure of the conductive support. In the example illustrated in FIG. 5, a conductive support 149B includes a rod-shaped first end part 181B, and a rod-shaped second end part 182B. The first end part 181B is inserted into the main body 141. In addition, the second end part 182B extends to the side opposite to the main body 141. The second end part 182B may further be connected to the lead 155 described above. Alternatively, the second end part 182B may be formed integrally with the lead 155 described above.

### (Lead 155)

The material forming the lead 155 is not limited to a particular material, and may be formed by any conductive material. The conductive material is preferably molybdenum, tungsten, iron, nickel, copper, chromium, cobalt, or an alloy of such metals. In addition, the dimensions, shape, and the like of the lead 155 are also not limited specifically. As described above, the lead 155 may be integrally formed with the conductive support (149, 149A, 149B).

Particularly, the lead 155 has a cross sectional area S2 at a position R (refer to FIG. 3) adjacent to the sealing part 151 within the discharge space 120, and this cross sectional area S2 is preferably less than or equal to the cross sectional area S1 of the main body 41 (cross sectional area along the direction perpendicular to the longitudinal direction). For example, the cross sectional area ratio (S1:S2) of the cross sectional area S1 of the main body 141 and the cross sectional area S2 of the lead 155 may be in a range of 1:1 to 2500:1. This range is preferably in a range of 1.5:1 to 750:1, and more preferably in a range of 4:1 to 500:1. In this case, it may be possible to significantly suppress the heat of the main body 141 of the electrode 140 from dissipating outside the hot cathode fluorescent lamp 100 via the conductive support 149 and the lead 155.

For example, the cross sectional area (S2) of the lead 155 is preferably in a range of 0.007 mm² to 400 mm², and more preferably in a range of 0.01 mm² to 400 mm².

### (Phosphor 170)

For example, europium activated yttrium oxide phosphor, cerium terbium activated lanthanum phosphate phosphor, europium activated strontium halophosphate phosphor, europium activated barium magnesium aluminate phosphor, europium manganese activated barium magnesium aluminate phosphor, terbium activated cerium aluminate phosphor, terbium activated cerium magnesium aluminate phosphor, antimony activated calcium halophosphate phosphor, and the like may be used for the phosphor 170, either independently or in a mixture.

The shape, size, watt number, and color and color rendering property of the light emitted from the hot cathode fluorescent lamp 100 are not limited specifically. The shape is not limited to a straight tube as illustrated in FIG. 3, and for example, the shape may be a circular shape, a bicyclic shape, a twin shape, a compact shape, a U-shape, a light bulb shape, and the like. The size may be a 4-type to a 110-type, for example. The watt number may be several watts to several hundreds watts, for example. The light color may be daylight color, day white color, white color, warm white color, electric bulb color, and the like, for example.

During operation (during arc discharge), the lamp current that flows between the two electrodes of the hot cathode fluorescent lamp 100 may be in a range of 0.010 A to 1 A, for example.

The temperature of the electrode 140 during operation of the hot cathode fluorescent lamp 100 may be on the order of 800°C to 1500°C, for example.

### (Method of Manufacturing Main Body of Electrode)

Next, a description will be given of an example of a method of manufacturing the main body 141 of the electrode 140 according to the present invention.

The method of manufacturing the main body 141 may be roughly categorized into two methods, depending on the difference in the process of making the mayenite compound conductive. A first method obtains a sintered body by sintering mayenite compound powder, thereafter works the sintered body into a desired shape, and then makes the mayenite compound conductive. On the other hand, a second method sinters mayenite compound powder to obtain a sintered body, and makes the sintered body conductive simultaneously as when the sintered body is obtained.

### (First Method)

The first method of manufacturing the main body 141 made of the conductive mayenite compound includes a step (step 110) to adjust powder including the mayenite compound, a step (step 120) to form a compact including the powder, a step (step 130) to obtain a sintered body, and a step (step 140) to perform a treatment on the sintered body that is obtained in order to make the sintered body conductive. Next, a detailed description will be given of each of the steps.

### (Step 110)

First, mayenite compound powder having an average particle diameter on the order of 1 µm to 10 µm is prepared. Particularly, the average particle diameter of the powder is preferably 2 µm or greater and 6 µm or less. When the average particle diameter is less than 1 µm, the powder may condense and make it difficult to make the powder finer. On the other hand, when the average particle diameter is greater than 10 µm, the sintering may be difficult to progress.

Usually, the mayenite compound powder may be adjusted by coarse-grinding a mayenite compound raw material into coarse powder and further grinding the coarse powder into fine powder. A stamp mill, an automatic mortar grinder, and the like may be used for the coarse-grinding of the raw material until the average particle diameter becomes approximately 20 µm. A ball mill, a bead mill, and the like may be used for the grinding of the coarse powder until the fine powder having the average particle diameter described above is obtained.

### (Step 120)

Next, a compact including the mayenite compound powder is formed.

The method of forming the compact is not limited specifically, and the compact may be formed by via a paste (or slurry, the same hereafter), or pressing the powder or paste.

For example, the paste may be adjusted by adding the adjusting powder described above into a solvent together with a binder and agitating the mixture. An organic binder or an inorganic binder may be used for the binder. For example, nitro cellulose, ethyl cellulose, polyethylene oxide and the like may be used for the organic binder. In addition, butyl acetate, terpineol, alcohol expressed by a chemical formula CₙH₂ₙ₊₁OH (n = 1 to 4), for example, may be used for the solvent.

Thereafter, the paste is subjected to extrusion molding or injection molding, in order to form the compact.

Alternatively, the adjusted powder or the paste described above may be inserted into a metallic mold, and pressure may be applied to this metallic mold, in order to form the compact to a desired shape.

### (Step 130)

Next, the compact that is obtained is fired. When the compact includes the solvent, the solvent may be volatilized and removed in advance by maintaining the compact in a temperature range of 50°C to 200°C for approximately 20 minutes to 30 minutes. In addition, when the compact includes the binder, the binder may be removed in advance by maintaining the compact in a temperature range of 200°C to 800°C for approximately 20 minutes to 30 minutes. Alternatively, the removal of the solvent and the binder may be performed simultaneously.

A firing condition is not limited specifically.

A firing treatment may be performed in an atmosphere environment, in a vacuum, in an inert gas atmosphere, or the like.

For example, a firing temperature is in a range of 1200°C to 1415°C, and preferably in a range of 1250°C to 1350°C. The sintering may be insufficient when the firing temperature is lower than 1200°C, and the sintered body obtained in this case may be fragile. On the other hand, when the firing temperature is higher than 1415°C, melting of the powder may progress, and the shape of the compact may be difficult to maintain.

The hold time for which the compact is maintained at the temperature described above may be adjusted so that the sintering of the compact is completed. The hold time is preferably 5 minutes or longer, more preferably 10 minutes or longer, and further more preferably 15 minutes or longer. When the hold time is shorter than 5 minutes, the sintering may not progress sufficiently. No problems are encountered from the point of view of the characteristic of the compact even when the hold time is set long, however, when the manufacturing cost is taken into consideration, the hold time is preferably 6 hours or shorter.

The sintered body that is obtained is thereafter worked into the desired shape. The method of working the sintered body is not specifically limited, and machining, discharge machining, laser beam machining, and the like may be used.

### (Step 140)

Next, a treatment is performed on the sintered body (mayenite compound) in order to make the sintered body conductive.

The sintered body may be made conductive by performing a heat treatment on the sintered body in a reducing atmosphere. The reducing atmosphere refers to an atmosphere in which an oxygen partial pressure is 10⁻³ Pa or lower, or a depressurized environment, in which a reducing agent exists at a portion contacting the atmosphere. For example, carbon or aluminum powder may be mixed as the reducing agent to a raw material of the mayenite compound. In addition, carbon, calcium, aluminum, or titanium may be provided at the part in contact with the atmosphere. In a case in which the reducing agent is carbon, for example, the compact may be set in a carbon container and fired under vacuum.

The oxygen partial pressure is preferably 10⁻⁵ Pa or lower, and more preferably 10⁻¹⁰ Pa or lower, and further more preferably 10⁻¹⁵ Pa. When the oxygen partial pressure is higher than 10⁻⁵ Pa, a sufficiently high conductivity may be difficult to obtain.

A heat treatment temperature may be in a range of 600°C to 1415°C. The temperature of the heat treatment is preferably in a range of 1000°C to 1400°C, more preferably in a range of 1200°C to 1370°C, and further more preferably in a range of 1300°C to 1350°C. When the temperature of the heat treatment is lower than 600°C, it may be difficult to make the mayenite compound sufficiently conductive. On the other hand, when the temperature of the heat treatment is higher than 1415°C, melting of the sintered body may progress and the shape of the compact may be difficult to maintain.

A heat treatment time (hold time) is preferably in a range of 5 minutes to 6 hours, more preferably in a range of 10 minutes to 4 hours, and further more preferably in a range of 15 minutes to 2 hours. When the hold time is less than 5 minutes, it may be difficult to make the mayenite compound sufficiently conductive. No problems are encountered from the point of view of the characteristic of the compact even when the hold time is set long, however, when the manufacturing cost is taken into consideration, the hold time is preferably 6 hours or shorter.

By the series of treatments described above, the main body 141 formed by the conductive mayenite compound may be manufactured.

### (Second Method)

The second method of manufacturing the main body 141 made of the conductive mayenite compound includes a step (step 210) to adjust powder including the mayenite compound, a step (step 220) to form a compact including the powder, and a step (step 230) to fire the compact in order to obtain a sintered body, and at the same time, make the sintered body conductive. The step 210 and the step 220 may be the same as the step 110 and the step 120 of the first method described above. Hence, in the following, a detailed description will be given of the step 230.

### (Step 230)

This step fires the compact obtained by the step 220 by a firing treatment. When the compact includes the solvent, the solvent may be volatilized and removed in advance by maintaining the compact in a temperature range of 50°C to 200°C for approximately 20 minutes to 30 minutes. In addition, when the compact includes the binder, the binder may be removed in advance by maintaining the compact in a temperature range of 200°C to 800°C for approximately 20 minutes to 30 minutes. Alternatively, the removal of the solvent and the binder may be performed simultaneously.

The firing treatment may be performed by performing a heat treatment on the compact in a reducing atmosphere. The reducing atmosphere refers to an inert gas atmosphere in which an oxygen partial pressure is 10⁻³ Pa or lower, or a depressurized environment, in which a reducing agent exists at a portion contacting the atmosphere. For example, carbon or aluminum powder may be mixed as the reducing agent to a raw material of the mayenite compound. In addition, carbon, calcium, aluminum, or titanium may be provided at the part in contact with the atmosphere. In a case in which the reducing agent is carbon, for example, the compact may be set in a carbon container and fired in a vacuum.

The oxygen partial pressure is preferably 10⁻⁵ Pa or lower, and more preferably 10⁻¹⁰ Pa, and further more preferably 10⁻¹⁵ Pa or lower. When the oxygen partial pressure is higher than 10⁻⁵ Pa, it may be difficult to make the mayenite compound sufficiently conductive.

A firing temperature may be in a range of 1200°C to 1415°C. The firing temperature is preferably in a range of 1250°C to 1350°C. The sintering may not progress sufficiently when the firing temperature is lower than 1200°C, and the sintered body obtained in this case may be fragile. In addition, it may be difficult to make the mayenite compound sufficiently conductive. On the other hand, when the firing temperature is higher than 1415°C, melting of the powder may progress, and the shape of the compact may be difficult to maintain.

The sintering time (hold time) may be set arbitrarily as long as the sintering of the compact is completed and the mayenite compound is made sufficiently conductive. The hold time is preferably in a range of 5 minutes to 6 hours, more preferably in a range of 10 minutes to 4 hours, and further more preferably 15 minutes to 2 hours. When the hold time is shorter than 5 minutes, the mayenite compound may not be made sufficiently conductive. No problems are encountered from the point of view of the characteristic of the compact even when the hold time is set long, however, when the manufacturing cost is taken into consideration, the hold time is preferably 6 hours or shorter.

By the series of treatments described above, the main body formed by the conductive mayenite compound may be manufactured.

The above manufacturing methods for the main body 141 of the electrode 140 are described for an example in which the main body 141 is formed solely of the conductive mayenite compound.

On the other hand, when forming the main body including a mixture of the mayenite compound and an alkaline earth metal oxide, a mixture powder may be adjusted by adding powder of a desired alkaline earth metal carbonate, for example, to the mayenite compound powder at the stage of the step 110 and the step 210 described above. However, when using such a mixture powder as a starting material, a measure may be required to remove CO₂ that is generated during a reaction process. Otherwise, when the CO₂ remains, the mercury within the hot cathode fluorescent lamp may be deteriorated thereby to deteriorate the luminous efficiency.

The removal of the CO₂ may be performed in advance in a nitrogen atmosphere or in a vacuum, for example, by maintaining the compact at a temperature of 800°C to 1200°C for a time on the order of 20 minutes to 30 minutes.

### Practical Examples

Next, a description will be given of practical examples of the present invention.

### (Practical Example 1)

The hot cathode fluorescent lamp having the above described features was actually manufactured by the following methods, and characteristics of the lamp were evaluated.

### (Forming Electrode)

The electrode was formed by a main body made of the conductive mayenite compound, a support made of molybdenum, and a copper lead wire.

First, a sintered body of the conductive mayenite compound to be used for the main body was formed in the following manner.

Powder of calcium carbonate (CaCO₃) and powder of aluminum oxide (Al₂O₃) were mixed and adjusted to a mole fraction of 12:7, and maintained at 1300°C for 6 hours in atmosphere. An automatic mortar grinder was used to grind the sintered body in order to obtain powder (hereinafter referred to as powder A1). The particle size of this powder A1 was measured by a laser diffraction scattering method (SALD-2100 manufactured by Shimadzu Corporation), and the average particle diameter was 20 µm. In addition, it was found from an X-ray diffraction that the powder A1 includes only the 12CaO-7Al₂O₃ structure, and it was confirmed that the powder A1 is a (nonconductive) mayenite compound. In addition, when the electron density of the powder A1 was measured by an ESR apparatus, the electron density was less than 1 x 10¹⁵ cm⁻³.

Next, the powder A1 was pressed at a pressure of 2 MPa to form a compact having a disk shape with a diameter of 1 cm and a thickness of 5 mm. Further, this compact was heated to 1350°C to obtain a sintered body. After setting the obtained sintered body into a carbon container with a lid, the carbon container with the lid was set within an electric furnace in a vacuum with an oxygen partial pressure of 10⁻³ Pa or lower (that is, the "reducing atmosphere" described above) and maintained at 1300°C for 2 hours. In addition, a wet ball mill was used to grind the obtained sample using isopropyl alcohol as the solvent, in order to obtain powder A2. As a result of the measurement using the laser diffraction scattering method described above, and the average particle diameter of the powder A2 was 2 µm.

The electron density of the powder A2 was measured from a diffuse reflectance spectrum by the Kubelka-Munk method. As a result, the electron density of the powder A2 was 7 x 10¹⁸ cm⁻³, and it was found that the powder A2 is a conductive mayenite compound.

Next, the powder A2 was pressed to form a rectangular column-shaped compact having a length of 40 mm, a width of 20 mm, and a thickness of 10 mm. This compact was set in a carbon container with a lid, and the inside of the container was set to a vacuum of 10⁻³ Pa or lower and maintained at 1300°C for 2 hours. As a result, a sintered body B was obtained.

A cylindrical rod sample was formed by grinding the sintered body B. The dimensions of the cylindrical rod was approximately 1.85 mm in diameter, approximately 10 mm in length, and the cross section (S1) was 2.69 mm². After the grinding, a heat treatment was performed with respect to this sample in order to reform the surface. The heat treatment was performed in a vacuum with an oxygen partial pressure of 10⁻³ Pa or lower, in a state in which the sample is placed within a carbon container, and maintained at 1325°C for 2 hours. No change was observed in the cross sectional area.

The main body for the electrode was obtained by the series of treatments described above.

Next, a support made of molybdenum was prepared. The support has a cup shape in which a disk is set on one end of the hollow circular cylinder, and a metal lead wire is provided at a center of the disk. The inner diameter of the cup part is approximately 1.9 mm (dimensions such that the main body fits therein), and the outer diameter of the cup part was approximately 2.1 mm. The overall length of the support was approximately 5.1 mm. A Dumet wire having a diameter of 1 mmø, that is, a cross sectional area (S2) of 0.79 mm², was connected to a bottom part of this support.

The main body was fitted into the cup opening of the support, in order to connect the main body to the support. A length of an exposed part of the main body exposed from the support was approximately 5 mm.

An electrode X was obtained by the series of treatments described above.

### (Forming Hot Cathode Fluorescent Lamp)

First, a hollow circular cylinder-shaped glass tube having phosphor coated on a transparent inner surface thereof was prepared. This glass tube had an overall length of approximately 245 mm and a diameter of approximately 30 mm.

The electrode X described above was provided on both ends of the glass tube, and both ends of the glass tube was sealed in a state in which a lead wire is drawn to the outside from an intermediate part. Hence, a pair of electrodes was accommodated within the discharge space with a separation distance between the electrodes of approximately 180 mm. The overall length of the lead wire part of the electrode accommodated within the discharge space was approximately 3 mm.

A rare gas and mercury were filled into the discharge space of the glass tube, as the discharge gas. The rare gas was a mixture gas of neon and argon (neon:argon = 90:10), and the partial pressure was 266 Pa. Approximately 120 mg of mercury was filled into the discharge space, and as a result, a lamp (hereinafter referred to as a "lamp A") was obtained.

### (Initial Evaluation)

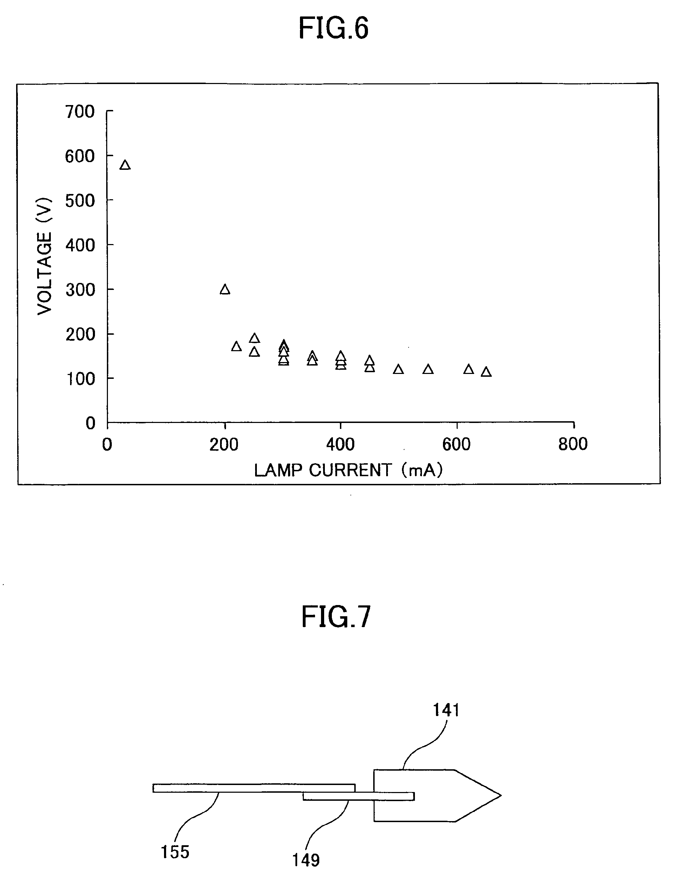

The operation of the hot cathode fluorescent lamp A that is obtained in the above described manner was evaluated. A ballast resistor of 100 Ω was provided in a D.C. power supply, energy was supplied between the two electrodes via the lead wire, and a voltage generated between the two electrodes was measured for the operation. FIG. 6 illustrates a result of this measurement. As illustrated in FIG. 6, immediately after the start of the discharge, the current is low and a high voltage is generated between the two electrodes. However, after the lamp current value increases to approximately 200 mA, the voltage gradually decreased as the lamp current increased. This result indicates that the arc discharge is properly generated within the discharge space, and that the arc discharge is properly maintained. Hence, it was confirmed that the hot cathode fluorescent lamp having the electrode according to the present invention operates correctly.

### (Comparison Example 1)

In order to compare durabilities of the conventional lamp having the filament structure and the lamp A described above, a lamp having a filament coated with an electride was formed.

### (Forming Electrode)

Butyl carbitol acetate, terpineol, and ethylcellulose were added to the powder A2 obtained by the Practical Example 1, with a weight ratio so that [powder A2]:[butyl carbitol acetate]:[terpineol]:[ethylcellulose] becomes 6:2.4:1.2:0.4 and kneaded by an automatic mortar grinder, and further subjected to a precision mixing using a centrifugal mixer in order to obtain the paste A. Next, a commercially available tungsten filament (W-460100 manufactured by The Nilaco Corporation) was dipped in the paste A, and an electride was coated thereon. After coating of the electride, the filament was dried in air at 80°C. After the drying, the weight of the coated electride powder was 4 mg.

Next, the lamp was formed. The length and diameter of the glass tube, the separation distance between the electrodes, the type of gas, and the gas pressure were set the same as those of the Practical Example 1 described above. The electrode part was formed by providing the electride-coated-filament described above to the part of the filament 42, in a manner similar to the conventional hot cathode fluorescent lamp 10. Further, before sealing both ends, the filament was energized and heated to 1000°C to remove organic components, while evacuating the inside of the glass tube. Thereafter, the rare gas and the mercury were filled into the glass tube, and a lamp (hereinafter referred to as a "lamp B") was obtained.

### (Comparison Example 2)

A lamp (hereinafter referred to as a "lamp C") coated with BaO was formed according to a method similar to that used to form the lamp B, except that barium carbonate was used in place of the powder A2 in the components of the paste A used in the Comparison Example 1.

### (Practical Example 2)

### (Durability Evaluation of Lamp A)

The extent of electrode deterioration was evaluated for the lamps A, B, and C described above, by raising the electrode temperature to a predetermined temperature to light the lamp, maintaining the lighted state for 5 minutes from the start of the lighting, turning off the lamp to be self-cooled for 10 minutes, and repeating such a cycle of maintaining the lighting and cooling the electrode for a maximum of 50 times. The electrode temperature during the test was measured using a radiation thermometer (TR-630 manufactured by Minolta Co., Ltd.).

The lamp A was tested by providing a ballast resistor of 100 Ω was provided in a D.C. power supply, connecting the two electrodes via a lead wire, and supplying energy between the two electrodes via the lead wire. When the temperature of the electrode part was measured at the start of the lighting during the test, the temperature was approximately 1400°C. After maintaining the lighting of the lamp for 5 minutes, the lamp was turned off and the electrode was self-cooled for 10 minutes. Such an operation of lighting and turning off the lamp was repeated 50 times. The lamp A repeated the lighting and turning off in a normal manner until the test of the 50 repetitions ended.

### (Comparison Example 3)

### (Durability Evaluation of Lamp B)

The lamp B was tested by connecting a D.C. power supply to the filament to heat the electrode, separately connecting a D.C. power supply and a ballast resistor of 100 Ω to the two electrodes, and supplying energy to the lamp for lighting. When the energy was supplied to the filament to heat the filament, the temperature at the start of the lighting was approximately 1400°C. After the lighting, the supply of energy to the filament to heat the filament was stopped, and the lighting of the lamp was maintained for 5 minutes. Thereafter, the lamp was turned off to cool the electrodes, and the lamp was self-cooled for 10 minutes. Such an operation of lighting and turning off the lamp was repeated, and it was confirmed that a part of the electride powder separates at a stage where the lighting is repeated 30 times. When such a test was continued, the lighting of the lamp was no longer possible after the lighting was repeated 42 times. When the electrode part of the lamp B was observed, a disconnection of the filament was confirmed at the part where the conductive mayenite separated.

### (Comparison Example 4)

### (Durability Evaluation of Lamp C)

The lamp C was tested by the same method as the lamp B. When the energy was supplied to the filament to heat the filament, the temperature at the start of the lighting was approximately 1400°C. After the lighting, the supply of energy to the filament to heat the filament was stopped, and the lighting of the lamp was maintained for 5 minutes. Thereafter, the lamp was turned off to cool the electrodes, and the lamp was self-cooled for 10 minutes. Such an operation of lighting and turning off the lamp was repeated, and it was confirmed that the BaO powder is consumed and the coated part turns black at a stage where the lighting is repeated 28 times. In addition, it was confirmed that the BaO powder is scattered to the surrounding. When the test was continued and such an operation was repeated 35 times, a coloring that may be regarded as being caused by a sputtered metal component was observed on the inner wall of the glass tube of the lamp. When the test was continued further, the lighting of the lamp was no longer possible after the lighting was repeated 48 times, and the repetition of the test was no longer possible. When the lamp C was disassembled and the electrode and the inner wall of the glass tube were observed, virtually no BaO remained on the filament, and a disconnection of the filament was confirmed. A filament component W was detected from the inner wall of the glass tube.

Therefore, it was confirmed that the electrode formed from the conductive mayenite bulk material and having no filament may maintain stable characteristics for a long time when compared to the conventional filament electrode.

### (Practical Example 3)

A hot cathode fluorescent lamp including the electrode having the characteristics described above was actually formed by the following method, and a hot cathode behavior thereof was confirmed.

### (Forming Electrode)

The electrode was formed by a main body made of a sintered body of the conductive mayenite compound, a support made of nickel, and a kovar lead wire.

First, the mayenite compound powder was prepared in the following manner.

Powder of calcium carbonate (CaCO₃) and powder of aluminum oxide (Al₂O₃) were mixed so that a mole-fraction-equivalent of [calcium oxide (CaO)]:[aluminum oxide (Al₂O₃)] becomes 12:7. Next, this mixture powder was heated to 1350°C in atmosphere at a heating speed of 300°C/hour, and this mixture powder was maintained at 1350°C for 6 hours. Thereafter, this mixture powder was cooled at a cooling speed of 300°C/hour, in order to obtain a white ingot.

An alumina stamp mill was used to grind the white ingot into chips having a size of approximately 5 mm, and an alumina automatic mortar grinder was used to further grind the chips into white particles (hereinafter referred to as particles P1). The particle size of the particles P1 was measured by a laser diffraction scattering method (SALD-2100 manufactured by Shimadzu Corporation), and the average particle diameter was 20 µm.

350 g of the particles P1, 3 kg of zirconia balls having a diameter of 5 mm, and 350 ml of industrial EL grade isopropyl alcohol used as the grinding solvent were supplied to a 2-liter zirconia container, and after placing a zirconia lid on the zirconia container, a ball mill grinding process was performed by rotating the zirconia container with the lid at a rotational speed of 94 rpm for 16 hours.

After the process, the slurry that is obtained was subjected to a filtering under reduced pressure in order to remove the grinding solvent. In addition, the remaining material obtained by the filtering was dried in an oven at 80°C for 10 hours. As a result, white powder (hereinafter referred to as powder Q1) was obtained. It was found from an X-ray diffraction analysis that the powder Q1 that is obtained has the C12A7 structure. In addition, the average particle size of this powder Q1 measured by the laser diffraction scattering method described above was 3.3 µm.

Next, a compact of the mayenite compound was formed in the following manner.

79.8 g of the powder B1 obtained by the above described method, 13.0 g of polyethylene oxide used as a binder for forming, 0.2 g of fatty acid ester used as a plasticizer, and 7.0 g of stearic acid used as a lubricant were blended, and a compact R1 was obtained by injection molding. The compact R1 had a (pencil-like) shape (hereinafter referred to as a pencil shape) in which one bottom surface of a cylinder is joined to a bottom surface of a circular cone. The cylindrical part had a diameter of 3.4 mm and a length of 5.0 mm, and the circular cone part had a length of 2.5 mm.

Next, a metal line was inserted into the compact in the following manner.

A hole having a diameter of 0.5 mm and a depth of 2.5 mm was formed at a center of the bottom surface of the compact R1 using a leutor.

A nickel wire having a wire diameter of 0.5 mm and a length of 10 mm was preheated using a hot plate that is heated to 150°C, and this nickel wire was inserted into the hole in the compact R1 to a depth of 2.5 mm. Hence, an assembly T1 having the nickel wire inserted into the compact R1 was obtained. Because the nickel wire was preheated, the resin at the contact part of the compact R1 softened to facilitate the insertion of the nickel wire. The compact R1 solidified at a temperature of 70°C or lower. For this reason, the inserted nickel wire could not be easily extracted at the temperature of 70°C or lower.

Next, a binder removal process was performed in the following manner on the assembly.

The assembly T1 was set on an alumina plate and placed inside an electric furnace, and was heated in air to 200°C in 40 minutes. In addition, after heating the assembly to 600°C in 8 hours, the assembly was cooled to room temperature in 2 hours in order to obtain a degreased body U1.

Next, a reducing sintering process was performed in the following manner on the degreased body.

The degreased body U1 and metal aluminum were put into an alumina crucible having a size of [an outer diameter of 20 mm] x [an inner diameter of 18 mm] x [a height of 20 mm], this alumina crucible was set in a first carbon crucible having a size of [an outer diameter of 40 mm] x [an inner diameter of 30 mm] x [a height of 40 mm], and a carbon lid was placed on the first carbon crucible. Further, the first carbon crucible with the lid was set in a second carbon crucible having a size of [an outer diameter of 80 mm] x [an inner diameter of 70 mm] x [a height of 75 mm], and a carbon lid was placed on the second carbon crucible.

The carbon crucible was placed in a vacuum atmosphere of 5 Pa or lower, and heated to 1250°C in 1 hour. After maintaining the carbon crucible at 1250°C for 6 hours, the carbon crucible was cooled to room temperature in 4 hours.

The surface of the material that is obtained was polished using a electroplated diamond grindstone without pouring cooling water, in order to obtain a joint body V1 of the main body and the conductive support. In the cylindrical part, the main body had a diameter of 2.8 mm and a length of 4.1 mm, and the circular cone part had a length of 2.0 mm. In addition, the cross sectional area (S1) of the cylindrical part was 5.94 mm².

Moreover, a main body was formed in a similar manner but without inserting the nickel wire. The weight of this main body was 0.085 g. When this main body was subjected to grinding and an X-ray diffraction analysis was performed on the powder obtained by the grinding, it was found that the powder is a single phase C12A7. In addition, the electron density of the obtained powder acquired from a diffuse reflectance spectrum according to the Kubelka-Munk method was 1.6 x 10²¹ cm⁻³. Hence, it was also confirmed from the electron density that the obtained powder is the conductive mayenite compound.

An electrode Y was obtained by spot-welding the conductive support of the joint body V1 and the kovar wire forming the lead wire. The kovar wire had a diameter of 0.8 mm and a cross sectional area (S2) of 0.5 mm². In other words, S1:S2 was 11.9:1.

FIG. 7 illustrates the cross sectional area of the electrode Y. The electrode Y has the conductive support 149 inserted into the bottom surface on one end of the cylindrical part of the pencil-shaped main body 141, and is connected to the lead 155.

### (Forming Hot Cathode Fluorescent Lamp)

The electrode Y was welded and fixed on both ends of the glass tube having an outer diameter of 4 mm and an inner diameter of 3 mm, so that the separation distance of the electrodes is 80 mm. This glass tube was branched into a T-shape at a central part thereof, and connected to an evacuation base. Next, the inside of the lamp was evacuated to a vacuum of 10⁻⁵ Torr, and a vacuum evacuation process was performed for 30 minutes at 400°C. Thereafter, 120 mg of mercury was filled into the lamp, and a vacuum evacuation was again performed to 10⁻⁵ Torr. Finally, argon gas was filled into the lamp to 10 Torr, and the lamp was disconnected from the evacuation base by a gas burner in order to obtain a lamp (hereinafter referred to as a "lamp D").

### (Initial Evaluation)

The operation of the hot cathode fluorescent lamp D that is formed in the above described manner was evaluated. The lamp was set with respect to a D.C. circuit having a ballast resistor of 2 kΩ, and a current-voltage hysteresis was measured. First, the lamp was caused to make a glow discharge at approximately 10 mA, and the current was gradually increased. After a transition from the glow discharge to an arc discharge, the current was then gradually decreased, and after a transition from the arc discharge to the glow discharge, the lamp was turned off at approximately 10 mA. Such an operation was regarded to be 1 cycle, and 4 such cycles were measured.

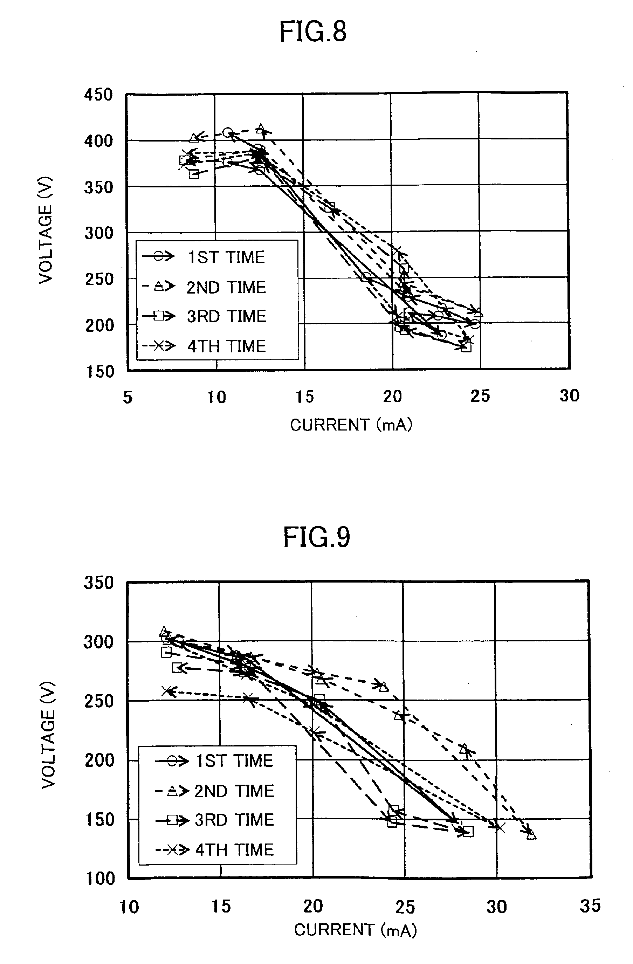

FIG. 8 illustrates a result of the measurement of 4 cycles. As illustrated in FIG. 8, the voltage rapidly decreases from approximately 400 V to approximately 200 V between the currents of 10 mA to 20 mA. Hence, it may be confirmed that the discharge state makes a transition from the glow discharge to the arc discharge by increasing the current, and that a transition from the arc discharge to the glow discharge occurs by decreasing the current. In addition, current-voltage characteristics that are approximately the same are obtained for the first time through the fourth time the cycle is performed, and it was confirmed that a stable arc discharge occurs by supplying energy of 20 mA or greater.

### (Practical Example 4)

### (Forming Hot Cathode Fluorescent Lamp)

A lamp (hereinafter referred to as a "lamp E") was formed in a manner similar to the Practical Example 3, except that the argon gas is filled into the lamp to 20 Torr.

### (Initial Evaluation)

FIG. 9 illustrates a result of the measurement of 4 cycles. As illustrated in FIG. 9, the voltage rapidly decreases from approximately 300 V to approximately 150 V between the currents of 20 mA to 30 mA. It was confirmed that, similarly as in the case of the lamp D, a stable arc discharge occurs by supplying energy of 30 mA or greater to the lamp E.

This application is based on a Japanese Patent Application No. 2010-124977 filed on May 31, 2010, the disclosure of which is hereby incorporated by reference.

### INDUSTRIAL APPLICABILITY

The present invention may be applied to fluorescent lamps and the like having an electrode for discharge.

### DESCRIPTION OF REFERENCE NUMERALS

- 10: Conventional Hot Cathode Fluorescent Lamp
- 20: Discharge Space
- 30: Glass Tube
- 40: Electrode
- 41: Main Body
- 42: Filament
- 42a, 42b: End Part
- 45a, 45b: Support Line
- 50: Plug Part
- 55: Pin
- 60: Protection Layer
- 70: Phosphor
- 100: Hot Cathode Fluorescent Lamp According To Present Invention
- 120: Discharge Space
- 130: Bulb
- 140: Electrode
- 141: Main Body
- 149: Conductive Support
- 151: Sealing Part
- 152, 152A: Accommodating Opening
- 155: Lead
- 159: Opening
- 160: Protection Layer
- 170: Phosphor
- 181A, 181B: First End Part
- 182A, 182B: Second End Part

## Claims

1. An electrode for a hot cathode fluorescent lamp, comprising:
a main body that emits thermions;
a conductive support that supports the main body; and
a lead electrically connected to the conductive support,
wherein the main body includes no filament structure and is made of a bulk material having a columnar shape or an ingot shape formed by a conductive mayenite compound.

2. The electrode as claimed in claim 1, wherein a number of the lead is one.

3. The electrode as claimed in claim 1 or 2, wherein the lead and the conductive support are formed integrally.

4. The electrode as claimed in any of claims 1 to 3, wherein the main body has a rod shape.

5. The electrode as claimed in any of claims 1 to 4, wherein the main body has a mass in a range of 0.001 g to 20 g.

6. The electrode as claimed in any of claims 1 to 5, wherein the main body has a shape that is elongated along a major axis, and a cross section along a direction perpendicular to the major axis has a cross sectional area (S1) in a range of 0.07 mm² to 500 mm².

7. The electrode as claimed in claim 6, wherein
the conductive support includes two end parts,
a first end part is connected to the main body,
a second end part has a shape extending in a direction opposite to the main body, and
the second end part is connected to the lead or forms the lead.

8. The electrode as claimed in claim 7, wherein
the lead penetrates and is sealed in a sealing part that hermetically seals a discharge space of the hot cathode fluorescent lamp in a state in which the electrode is connected to the hot cathode fluorescent lamp,
a part of the lead adjacent to the sealing part has a cross sectional area (S2) within the discharge space, and
a ratio of the cross sectional area (S1) of the main body in the direction perpendicular to the major axis and the cross sectional area (S2) of the lead is in a range of 1:1 to 2500:1 (S1:S2).

9. The electrode as claimed in claim 8, wherein the cross sectional area (S2) of the lead is in a range of 0.007 mm² to 400 mm².

10. A hot cathode fluorescent lamp comprising a bulb provided with phosphor, and a pair of electrodes within the bulb,
wherein at least one of the pair of electrodes is the electrode according to one of claims 1 to 9.

11. An illumination apparatus comprising the hot cathode fluorescent lamp according to claim 10, and including no heating circuit.

12. An illumination apparatus for lighting control, comprising the hot cathode fluorescent lamp according to claim 10, and including a lighting circuit for lighting control that includes no heating circuit.
